# EUROPEAN PATENT SPECIFICATION

(11) **EP 1 680 210 B1**
(45) Date of publication and mention of the grant of the patent: **22.01.2014**
(21) Application number: 04761286.6
(22) Date of filing: 15.09.2004
(51) Int. Cl.: B01D 65/02, B01D 63/04, B01D 63/02

(54) **IMPROVED METHOD OF CLEANING MEMBRANE MODULES**
VERBESSERTES VERFAHREN ZUR REINIGUNG VON MEMBRANMODULEN
PROCEDE AMELIORE DE NETTOYAGE DE MODULES MEMBRANAIRES

(30) Priority: 19.09.2003 AU 2003905139
(43) Date of publication of application: 19.07.2006
(73) Proprietor: Siemens Water Technologies LLC, Alpharetta, GA 30022 (US)
(72) Inventor: ZHA, Fufang, West Ryde, NSW 2114 (AU); LAZAREDES, Huw, Alexander, North Richmond, NSW 2754 (AU); CAO, Zhiyi, Lidcombe, NSW 2141 (AU)
(74) Representative: French, Clive Harry
(86) International application number: PCT/AU2004/001251
(87) International publication number: WO 2005/028085

(56) References cited:
- WO-A1-01/36075
- WO-A1-85/01449
- WO-A1-86/05116
- WO-A1-86/05705
- WO-A1-93/02779
- WO-A1-98/28066
- US-A- 5 403 479
- PATENT ABSTRACTS OF JAPAN & JP 06 190 250 A (MITSUBISHI RAYON CO LTD) 12 July 1994
- DATABASE WPI Week 199439, Derwent Publications Ltd., London, GB; Class D15, AN 1994-313003, XP003003431 & JP 6 238 273 A (MITSUBISHI RYON ENG CO) 30 August 1994

## Description

The present invention relates to membrane filtrations systems and more particularly to improved methods and apparatus for cleaning the membranes used in such systems.

### BACKGROUND OF THE INVENTION

Membrane cleaning is a key step to the success of any membrane filtration process. Without regular cleaning the membranes become clogged with impurities and eventually inoperative. Different physical membrane cleaning strategies have been proposed and published. A summary of some typical methods is described below.
1. Scrubbing membranes with gas bubbles. This method was first published by Yamamoto et al. (Water Science Technology, Vol. 2, pages 43-54; 1989) and has been widely used in the low-pressure filtration processes. The shear force created by gas bubbles removes fouling materials on the membrane surface, but does little to reduce the fouling in the membrane pores.
2. Backwash or back pulsing method. This method uses a reversed flow of fluid through the membrane pores to dislodge of fouling materials therefrom. Either gas or liquid can be used as a fluid in the reverse backwash.

In a PCT Published Application No. WO 03/059495, Bartels et al describe a backwash technique where the hollow fiber membranes are pressurized with a gas on a feed side at a specified time during the backwash. They describe the periodic use of such backwash to effectively remove fouling components from the hollow fiber membranes.

To carry out a liquid backwash, typically a liquid pump and a liquid holding tank are required. The pump delivers a permeate flow in a reverse direction to the normal filtration flow through the membrane pores to clean accumulated solids and impurities from the membranes pores. In a pressurized membrane filtration process, this requires more ancillaries. In a typical membrane filtration system, the membrane modules are connected to a manifold or other similar piping arrangement to provide for inflow of feed and removal of filtrate/permeate. At the end of filtration period, the membrane permeate side and the permeate manifold remain filled with permeate.

WO 86/05116, WO 86/05705, WO 85/01449 and WO 93/02779 describe a process whereby a pressurized liquid is applied to remove solids from the shell.

### DISCLOSURE OF THE INVENTION

According to the present invention a method of filtering solids from a liquid suspension includes:
(i) providing a pressure differential across the walls of permeable, hollow membranes immersed in the liquid suspension, said liquid suspension being applied to the outer surface of the porous hollow membranes to induce and sustain filtration through the membrane walls wherein said membranes are mounted in a number of membrane modules and the membrane modules are used in a bank and connected to a manifold for removing permeate from the system; wherein:
   (a) some of the liquid suspension passes through the walls of the membranes to be drawn off as permeate from the hollow membrane lumens, and
   (b) at least some of the solids are retained on or in the hollow membranes or otherwise as suspended solids within the liquid surrounding the membranes,
(ii) periodically backwashing the membrane pores using the permeate remaining within the lumens by applying a gas to said liquid permeate to displace at least some of the liquid permeate within the lumens through the membrane pores resulting in removal of the solids retained on or in the hollow membranes;
wherein the pressure of the gas applied to the permeate is less than the bubble point of the membrane so that the gas does not penetrate into membrane pores;
wherein the gas is introduced into the manifold of the bank of modules so that permeate within the manifold is utilized for backwash; and
wherein permeate is taken from both ends of the membrane module and the gas pushed backwash is selected to apply to both ends of the membrane modules at the same time.

The present invention seeks to make use of such permeate remaining in the manifold and in the membranes as a source for liquid backwash.

An improved method of backwashing a membrane filtration system includes the step of using permeate remaining present in the system when the filtration process is stopped to provide liquid for backwashing the membrane pores during a backwashing process.

A pressurized gas is employed to push the remaining permeate through the membrane pores during backwashing of the membranes.

The pressure of the gas applied to the permeate is less than the bubble point of the membrane so that the gas cannot penetrate into membrane pores.

Preferably, during the backwashing step the solids are removed into the bulk liquid surrounding the membranes.

Preferably, permeate remaining in ancillaries such as headers, piping and the like may also be used in addition to that in the membrane lumens and the manifold as a source of backwash liquid. Where insufficient permeate volume for backwash is available from these sources, a further chamber or reservoir may be provided in the permeate flow circuit to increase the amount of permeate available for backwashing when filtration is suspended.

A general backwash procedure using the improved method may involve a number or all of the following steps.
· Filtering-down of feed level within the feed vessel using aeration gas or other low pressure gas sources;
· Scouring of membrane surfaces by flowing gas bubbles past the membrane surfaces;
· Backwashing the membrane pores by flowing permeate remaining present in the system in a reverse direction to the normal filtration flow through the membrane pores;
· Discharging of backwash waste by sweep, drain-down or by a feed and bleed process to partially discharge backwash waste;
· Refilling the membrane vessel, venting gas on the permeate side and resuming filtration.

At the end of backwash cleaning, the concentrated backwash waste has to be discharged from the module. There are two common ways to discharge the backwash waste: drain down the concentrate from the vessel or sweep the vessel with the feed flow. During the sweep process, it is a common practice to pump the feed into the bottom of the membrane vessel and the plug flow sweeps out of the concentrate from the top of the vessel.

We have found that it is beneficial to inject gas, typically air, into the membrane vessel during part or whole of the sweeping period. The gas bubbles formed in the vessel by injection of gas enhance the sweeping effect and the backwash efficacy is thus improved.

An improved method of cleaning a membrane filtration system may include the step of providing gas or gas bubbles within the membrane vessel during the sweep or drain down of concentrate from the vessel during or following a backwashing, scouring and/or cleaning step.

The sweeping with aeration of concentrate from the vessel can be partially or fully integrated with the liquid backwash step (either a pumped liquid backwash or the gas pushed liquid backwash described above).

Drain-down by gravity is a common method of discharging backwash waste from the membrane vessel. Incomplete drain-down can result in poor backwash efficiency in that highly concentrated waste may remain in the vessel and immediately re-foul the membranes on recommencement of filtration. In a system using groups of modules, there normally exists a layer of liquid waste at the bottom of the vessel after drain-down. Several improved methods can be used to reduce the impact of the remaining waste on the filtration process.
1) Gas facilitated drain-down. At the end of backwash, continue injection of the scouring gas into the feed vessel while shutting off the gas vent valve. The pressure of the scouring gas helps to facilitate the drain down. Alternatively, a pressurized gas can be applied to the feed vessel on the feed side to facilitate the drain down.
2) Dilute backwash waste. During a typical backwash cycle, gas scouring starts to dislodge the fouling materials from the membrane surface. The solids in the vessel can be partly drained first prior to or during the liquid backwash of the membrane pores. Due to a reduced volume of waste in the vessel, the concentration of solids is then diluted after the liquid backwash as more clean permeate comes out to the feed side of the membrane modules. In the final drain stage, even if an incomplete drain-down occurs, the solid concentration within the vessel is diluted when the vessel is re-filled with fresh feed water.
3) Flush of waste at the bottom of the vessel. The remaining backwash waste at the bottom of the vessel can be flushed out by pumping the feed water rapidly through the vessel. The backwash waste can be flushed out to the discharge or to the feed inlet and mixed with the fresh feed.

### BRIEF DESCRIPTION OF THE DRAWINGS

Preferred embodiments of the invention will now be described, by way of example only, with reference to the accompanying drawings in which:
Figure 1 is a schematic diagram of the six-module membrane filtration bank useful in the method of the invention;
Figure 2 is a graph of transmembrane pressure (TMP) profile over time; and
Figure 3 is a graph of resistance over time with and without air injection during the sweep step.

### PREFERRED EMBODIMENTS OF THE INVENTION

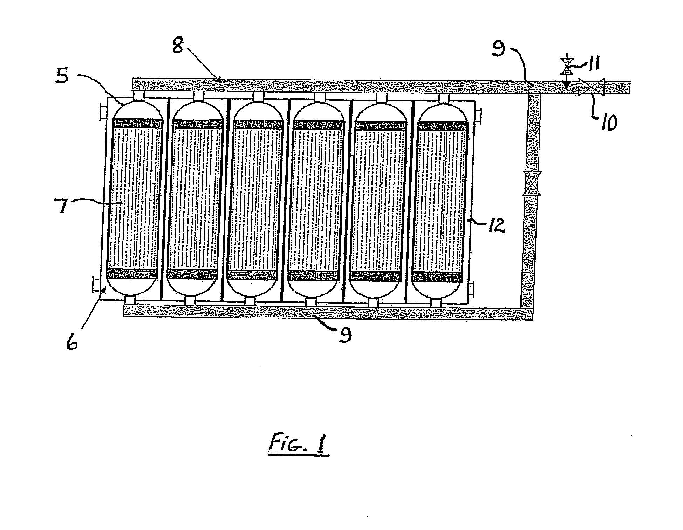

Referring to Figure 1, the hollow fiber membrane modules 5 are mounted in the pressure vessels 6 and the filtration flow is from the shell side into the fiber lumens 7. Each of the modules 5 is connected to upper and lower manifolds 8 and 9. The upper manifold 8 is used to remove permeate withdrawn from the fiber lumens 7 during the filtration process. When the filtration process is suspended for a cleaning cycle, the manifold 8, associated piping 9 and lumens 7 remain filled with permeate. In this embodiment, a liquid backwash is achieved by closing valve 10 and applying a pressurised gas, at a pressure below the membrane bubble point, through valve 11 to the permeate to push the permeate remaining in the manifold 8 and fiber lumens 7 through the membrane pores to the shell side 12 and remove solids retained in the membrane pores.

In one example, the filtration unit was operated at filtration for 20 minutes and then switched to a backwash procedure. The backwash protocol was as follows:
Stop filtration and start gas scouring of the fiber membrane surfaces.

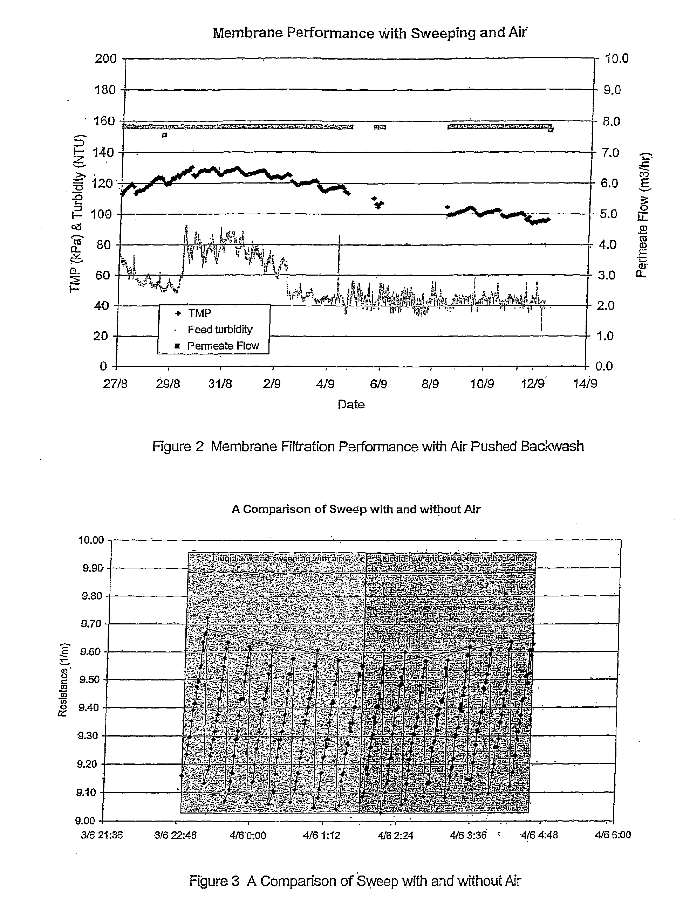

After gas scouring for 15 seconds, pressurised gas was applied through valve 11 to the permeate manifold 8 at a regulated pressure of around 2 bars to push the permeate in a reverse direction back through the membrane pores for 15 seconds.
· Solids removed by the scouring and backwashing were then swept out of the modules 5 by pumping the feed water through the vessels for 25 seconds.
· At the end of sweep, the gas pressure was released and filtration resumed Figure 2 shows the transmembrane pressure (TMP) profile over time with the above backwash strategy. The filtration performance was steady with a slight drop in transmembrane pressure (TMP) due to an improved feed water quality, indicating an effective backwash process.

In a further example, the effectiveness of employing air during the sweep was illustrated. In this example, eight cycles of sweeping solids from the vessel were carried out with gas being injected into the vessel and followed by the next eight cycles of sweeping without any gas injection. Figure 3 shows the resistance change during the course of both forms of sweep. It is clear that the resistance of the membrane had a slight drop when air was injected during the sweep, but started to climb when no air was supplied during the sweep.

The method according to the embodiments of the invention desirably may include the following advantages but are not limited to
1) Eliminating the backwash pump and tank holding the permeate for backwash;
2) Use of a pressurized gas can easily achieve a short duration of "back-pulse" that cannot be economically achieved by means of a pump;
3) Reduced liquid backwash waste;
4) Low energy operation; and
5) Applying negative transmembrane pressure (TMP) is equivalent to applied gas pressure at all points of the membrane if the lumens are totally emptied of liquid.

## Claims

1. A method of filtering solids from a liquid suspension including:
(i) providing a pressure differential across the walls of permeable, hollow membranes immersed in the liquid suspension, said liquid suspension being applied to the outer surface of the porous hollow membranes to induce and sustain filtration through the membrane walls wherein said membranes are mounted in a number of membrane modules and the membrane modules are used in a bank and connected to a manifold for removing permeate from the system; wherein:
(a) some of the liquid suspension passes through the walls of the membranes to be drawn off as permeate from the hollow membrane lumens, and
(b) at least some of the solids are retained on or in the hollow membranes or otherwise as suspended solids within the liquid surrounding the membranes,
(ii) periodically backwashing the membrane pores using the permeate remaining within the lumens by applying a gas to said liquid permeate to displace at least some of the liquid permeate within the lumens through the membrane pores resulting in removal of the solids retained on or in the hollow membranes;.
wherein the pressure of the gas applied to the permeate is less than the bubble point of the membrane so that the gas does not penetrate into membrane pores;
wherein the gas is introduced into the manifold of the bank of modules so that permeate within the manifold is utilized for backwash; and
wherein permeate is taken from both ends of the membrane module and the gas pushed backwash is selected to apply to both ends of the membrane modules at the same time.

2. A method of filtering solids from a liquid suspension according to claim 1 wherein during the backwashing step the solids are removed into the bulk liquid surrounding the membranes.

3. A method of filtering solids from a liquid suspension according to claim 2 further including the step of reducing the volume of the bulk liquid before the backwashing step.

4. A method of filtering solids from a liquid suspension according to claim 3 wherein the volume of bulk liquid is reduced by suspending provision of said liquid suspension while continuing to provide a pressure differential across walls of said membranes and draw of permeate from the membranes.

5. A method of filtering solids from a liquid suspension according to any one of claims 2 to 4 including the step of removing at least part of the bulk liquid containing the removed solids by a sweep, drain-down or by a feed and bleed process to at least partially discharge the bulk liquid.

6. A method of filtering solids from a liquid suspension according to any one of claims 1 to 5 including using permeate remaining in ancillaries such as headers, piping and the like in addition to that in the membrane lumens and the manifold as a source of backwash liquid.

## Patentansprüche

1. Verfahren zum Filtern von Feststoffen aus einer flüssigen Suspension, welches Folgendes umfasst:
(i) Bereitstellen einer Druckdifferenz an den Wänden durchlässiger Hohlmembranen, die in die flüssige Suspension eingetaucht sind, wobei die flüssige Suspension auf die Außenfläche der porösen Hohlmembranen aufgebracht wird, um eine Filtration durch die Membranwände zu bewirken und aufrechtzuerhalten, wobei die Membranen in einer Anzahl von Membranmodulen angebracht sind und die Membranmodule in einer Gruppe verwendet werden und an eine Sammelleitung zum Entfernen von Permeat aus dem System angeschlossen sind;
wobei:
(a) ein Teil der flüssigen Suspension durch die Wände der Membranen hindurchtritt, um den Hohlmembran-Lumina als Permeat entzogen zu werden, und
(b) wenigstens ein Teil der Feststoffe an oder in den Hohlmembranen oder anderweitig als suspendierte Feststoffe in der die Membranen umgebenden Flüssigkeit zurückgehalten wird,
(ii) periodisches Rückspülen der Membranporen unter Verwendung des in den Lumina verbleibenden Permeats durch Zuführen eines Gases zu dem flüssigen Permeat, um wenigstens einen Teil des flüssigen Permeats in den Lumina durch die Membranporen hindurch zu verdrängen, was ein Entfernen der an oder in den Hohlmembranen zurückgehaltenen Feststoffe zur Folge hat;
wobei der Druck des dem Permeat zugeführten Gases niedriger als der Blasenbildungspunkt der Membran ist, sodass das Gas nicht in Membranporen eindringt;
wobei das Gas in die Sammelleitung der Gruppe von Modulen eingeleitet wird, sodass Permeat in der Sammelleitung zur Rückspülung verwendet wird; und
wobei Permeat aus beiden Enden des Membranmoduls entnommen wird und das zurückgedrängte Gas gewählt wird, um beide Enden der Membranmodule gleichzeitig zu beaufschlagen.

2. Verfahren zum Filtern von Feststoffen aus einer flüssigen Suspension nach Anspruch 1, wobei während des Rückspülschrittes die Feststoffe in die Flüssigkeitsmasse, welche die Membranen umgibt, ausgetragen werden.

3. Verfahren zum Filtern von Feststoffen aus einer flüssigen Suspension nach Anspruch 2, welches ferner den Schritt des Verringerns des Volumens der Flüssigkeitsmasse vor dem Rückspülschritt umfasst.

4. Verfahren zum Filtern von Feststoffen aus einer flüssigen Suspension nach Anspruch 3, wobei das Volumen der Flüssigkeitsmasse verringert wird, indem die Zuführung der flüssigen Suspension unterbrochen wird, während weiterhin eine Druckdifferenz an den Wänden der Membranen bereitgestellt und Permeat aus den Membranen abgezogen wird.

5. Verfahren zum Filtern von Feststoffen aus einer flüssigen Suspension nach einem der Ansprüche 2 bis 4, welches den Schritt des Entfernens wenigstens eines Teils der Flüssigkeitsmasse, welche die entfernten Feststoffe enthält, durch ein Mitreißen, ein Ablassen oder durch einen Feed- und Bleed-Prozess umfasst, um die Flüssigkeitsmasse wenigstens teilweise auszutragen.

6. Verfahren zum Filtern von Feststoffen aus einer flüssigen Suspension nach einem der Ansprüche 1 bis 5, welches das Verwenden von in Zusatzteilen, wie etwa Kopfstücken, Rohrleitungen und Ähnlichem, verbleibendem Permeat zusätzlich zu demjenigen in den Membranlumina und der Sammelleitung als eine Quelle von Rückspülflüssigkeit umfasst.

## Revendications

1. Procédé de filtration de solides dans une suspension liquide consistant :
(i) à réaliser une pression différentielle dans les parois de membranes creuses, perméables, immergées dans la suspension liquide, ladite suspension liquide étant appliquée sur la surface externe des membranes creuses poreuses pour amorcer et entretenir la filtration à travers les parois membranaires, lesdites membranes étant montées dans une série de modules membranaires et les modules membranaires étant utilisés dans une batterie et reliés à un distributeur pour chasser du perméat du système, étant entendu :
(a) qu'une partie de la suspension liquide passe à travers les parois des membranes pour être extraite des lumières des membranes creuses sous la forme de perméat, et
(b) qu'au moins une partie des solides est retenue sur ou dans les membranes creuses ou d'une autre façon sous la forme de solides en suspension dans le liquide entourant les membranes ;
(ii) à rétrolaver périodiquement les pores membranaires en utilisant le perméat restant à l'intérieur des lumières par application d'un gaz audit perméat liquide pour déplacer au moins une partie du perméat liquide à l'intérieur des lumières à travers les pores membranaires, ce qui a comme résultat de chasser les solides retenus sur ou dans les membranes creuses ;
étant entendu que la pression du gaz appliqué au perméat est inférieure au point de bulle de la membrane de telle sorte que le gaz ne pénètre pas dans les pores membranaires ;
étant entendu que le gaz est introduit dans le distributeur de la batterie de modules de telle sorte que le perméat à l'intérieur du distributeur soit utilisé pour le rétrolavage ;
étant entendu que du perméat est prélevé aux deux extrémités du module membranaire et que l'on choisit d'appliquer le rétrolavage au gaz aux deux extrémités des modules membranaires en même temps.

2. Procédé de filtration de solides dans une suspension liquide selon la revendication 1 dans lequel, pendant l'étape de rétrolavage, les solides sont chassés dans le vrac liquide entourant les membranes.

3. Procédé de filtration de solides dans une suspension liquide selon la revendication 2 comprenant par ailleurs l'étape consistant à réduire le volume du vrac liquide avant l'étape de rétrolavage.

4. Procédé de filtration de solides dans une suspension liquide selon la revendication 3 dans lequel on réduit le volume du vrac liquide en suspendant l'alimentation en ladite suspension liquide tout en continuant de réaliser une pression différentielle dans les parois desdites membranes et à prélever du perméat dans les membranes.

5. Procédé de filtration de solides dans une suspension liquide selon l'une quelconque des revendications 2 à 4 comprenant l'étape consistant à enlever au moins une partie du vrac liquide contenant les solides chassés, par balayage, vidange ou par un processus d'alimentation et de purge en vue d'évacuer au moins partiellement le vrac liquide.

6. Procédé de filtration de solides dans une suspension liquide selon l'une quelconque des revendications 1 à 5 consistant à utiliser le perméat restant dans des équipements auxiliaires tels que collecteurs, tuyaux et analogue en plus de celui présent dans les lumières membranaires et le distributeur comme source de liquide de rétrolavage.
